# EUROPEAN PATENT APPLICATION

(11) **EP 1 398 138 A2**
(43) Date of publication of application: **17.03.2004**
(21) Application number: 03255740.7
(22) Date of filing: 12.09.2003
(51) Int. Cl.: B29C 65/18, E04C 2/54

(54) **A method of securing a body to a hollow structured panel**

(30) Priority: 13.09.2002 GB 0221185
(71) Applicant: Jensen, Jorn, 9260 Gistrup (DK)
(72) Inventor: Jensen, Jorn, 9260 Gistrup (DK)
(74) Representative: Lomas, Geoffrey Michael

(57) **Abstract**

A method of securing a body to a panel (2) of the type comprising a plurality of spaced apart, parallel sheets (4) and a plurality of spaced apart ribs (5) which serve to maintain the spatial relationship between the sheets (4), the ribs (5) and the inner surfaces of the sheets (4) defining cavities (6) having openings associated therewith, the openings being sealed by welding a sheet of sealing material (10) to the sheets (4) so as to close the openings, the body (9) being simultaneously welded to the panel (2) with the same welding operation.

There is also disclosed a panel (2) manufactured using the above method.

## Description

The present invention relates to a method of securing a body to a hollow structured panel of the type comprising a plurality of parallel sheets which are spaced apart by a plurality of ribs.

Cavities are defined between the inner surfaces of the sheets and the ribs, and where the cavities open to a margin of the sheet, the openings of the cavities may be sealed using a sheet of sealing material which is secured over the openings. This can be advantageously achieved using welding as disclosed in European patent specification No. EP 0919358A1.

Such hollow structured panels are often used as closure panels to close apertures formed in the roof of a building.

However it is often necessary to secure other component bodies to such panels so as, for example, to enable the panel to be secured to or mounted on another structure. This can be difficult to achieve because of the nature of the panels.

According to a first aspect of the invention there is provided a method of securing a body to a panel of the type comprising a plurality of spaced apart, parallel sheets and a plurality of spaced apart ribs which serve to maintain the spatial relationship between the sheets, the ribs and/or the inner surfaces of the sheets defining cavities having openings associated therewith at a margin of the panel, the openings being sealed by welding a sheet of sealing material to the panel so as to close the openings, the body being simultaneously welded to the panel with the same welding operation.

Preferably the panel, the sheet of sealing material and the body are urged together during welding.

Preferably the sheet of sealing material and the body are welded to said margin of the panel, the sheet of sealing material and the body being urged together during welding with a force which acts in a direction perpendicular to the margin.

Preferably the body melts during the welding process, subsequent cooling of the body welding the body to the panel.

Preferably the sheet of sealing material is positioned between the panel and the body.

Preferably the weld is created using a heated platen. Preferably the body is sandwiched between the sheet of sealing material and a second sheet of sealing material.

Preferably a protective material is position between the heated platen and the second sheet of sealing material to ensure that the heated platen does not come into contact with the second sheet of sealing material.

According to a second aspect of the invention there is provided a panel of the type comprising a plurality of spaced apart, parallel sheets and a plurality of spaced apart ribs which serve to maintain the spatial relationship between the sheets, the ribs and/or the inner surfaces of the sheets defining cavities having openings associated therewith at a margin of the panel, the openings having been sealed by welding a sheet of sealing material to the panel so as to close the openings, a body having been simultaneously welded to the panel in the same welding operation.

Preferably the body comprises a mesh portion, the mesh portion having been welded to the panel.

Preferably the body is formed from a metal material.

Preferably the panel comprises a closure panel for closing an opening formed in the roof of a building, the body comprising a bracket adapted to secure the closure panel to the periphery of the opening.

Preferably the bracket comprises two arms, the first arm being welded to the closure panel, the second arm extending outwardly from the closure panel.

Preferably the second arm is adapted to be secured to a periphery of the opening of the building.

Preferably the second arm of the bracket extends outwardly from the first arm at an angle of approximately 90 degrees, the bracket thus being of L-shaped cross section.

Alternatively the second arm of the bracket extends outwardly from the first arm at an angle of approximately 45 degrees.

According to a third aspect of the invention there is provided a closure assembly comprising a closure panel for closing an opening formed in the roof of a building, the closure panel being of the type comprising a plurality of spaced apart, parallel sheets and a plurality of spaced apart ribs which serve to maintain the spatial relationship between the sheets, the ribs and/or the inner surfaces of the sheets defining cavities having openings associated therewith at a margin of the panel, the openings having been sealed by welding a sheet of sealing material to the panel so as to close the openings, securing means having been simultaneously welded to the closure panel, the securing means also being secured to the periphery of the opening in the roof of the building.

Preferably a sheet of heat sensitive material is secured to the periphery of the opening, the underside of the closure panel being secured to and supported by the sheet of heat sensitive material, the arrangement being such that, when subjected to relatively high levels of heat, the sheet of heat sensitive material melts, the load of the closure panel acting on the melting sheet to pivot the closure panel downwardly through the opening about the securing means.

Preferably further heating breaks the weld between the securing means and the closure panel, the closure panel consequently falling downwardly through the opening.

Preferably the securing means comprises a bracket.

Alternatively the securing means comprises an elongate band, one end of which is welded to the closure panel, the other end of which is adapted to be secured to the periphery of the opening.

Preferably the band is flexible.

Preferably the band is made from a metal material.

Preferably the other end of the band comprises an eyelet through which a screw, pin or bolt can be inserted, the screw, pin or bolt also being secured to the periphery of the opening.

Preferably the securing means comprises two elongate bands, each being welded to the same end of the closure panel.

Alternatively the securing means comprises a bracket secured to a hinge, the arrangement being such that the closure panel can pivot about the hinge between an open position in which air can flow through the opening and a closed position in which the flow of air through the opening is prevented by the closure panel.

Preferably the hinge is mounted on a base frame forming the periphery of the opening, the base frame being manufactured from a thermally insulating material.

Preferably an additional insulating layer is secured to the base frame, the closure panel resting on the additional insulating layer when in the closed position.

Other aspects of the present invention may include any combination of the features or limitations referred to herein.

The present invention may be carried into practice in various ways, but embodiments will now be described by way of example only with reference to the accompanying drawings in which:
**Figure 1** is a perspective view of a closure assembly in accordance with the invention;
**Figure 2** is a sectional perspective view of part of the assembly of Figure 1;
**Figures 3 to 5** show the mains stages in a method of manufacture in accordance with the present invention;
**Figure 6** is a sectional view taken on line A-A of Figure 2 and shows the closure assembly in a first condition;
**Figure 7** is a view corresponding to Figure 6 and shows the closure assembly in a second condition;
**Figure 8** is a view corresponding to Figure 6 and shows the closure assembly in a third condition;
**Figure 9** is a view corresponding to Figure 6 and shows the closure assembly in a final condition;
**Figure 10** shows a perspective view of an alternative closure panel assembly in accordance with the present invention with the assembly in a closed condition;
**Figure 11** corresponds to Figure 10 and shows the assembly in an open condition;
**Figure 12** is a sectional view of part of the assembly of Figure 10;
**Figure 13** is a sectional view of part of the assembly of Figure 11;
**Figure 14** is a perspective view of a further alternative closure panel assembly in accordance with the present invention;
**Figure 15** is a sectional view of part of the assembly of Figure 14;
**Figure 16** shows an initial stage of an alterative method of manufacture in accordance with the present invention, and
**Figure 17** is a part sectional side view of an alternative closure assembly.

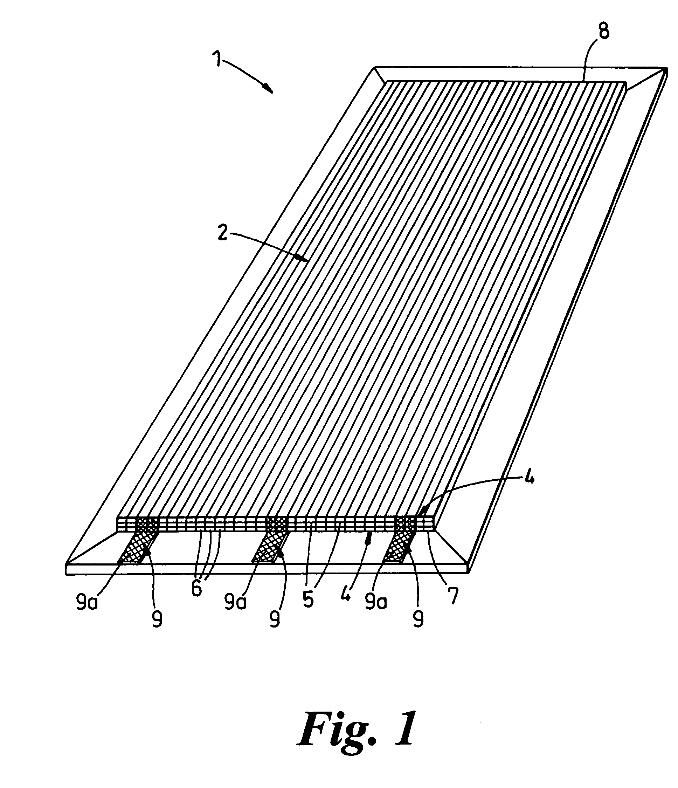

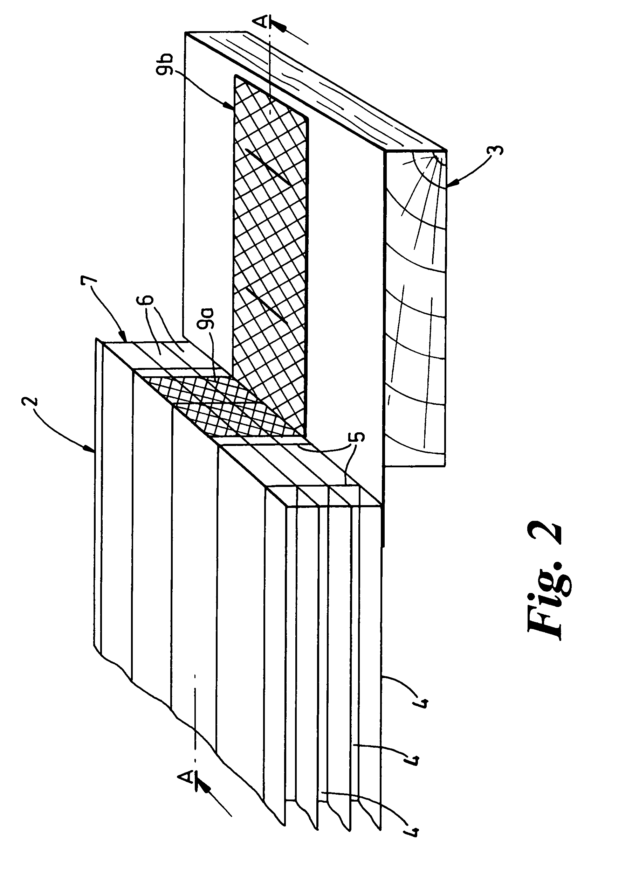

Referring to Figures 1 and 2, a closure assembly 1 comprises a hollow structured closure panel 2 secured to a wooden frame 3 forming the periphery of an opening formed in the roof of a building.

The closure panel 2 comprises a plurality of spaced-apart, parallel sheets 4 and a plurality of spaced apart ribs 5 which serve to maintain the spatial relationship between the sheets 4, the ribs 5 and the inner surfaces of the sheets 4 defining cavities in the form of flutes 6. The end margins 7, 8 of the closure panel 2 have openings at the distal ends of the flutes 6. The closure panel 2 is manufactured from a polycarbonate material.

The area defined within the inner periphery of the wooden frame 3 is less than the area of the closure panel 2 such that the closure panel overlaps with the wooden frame 3 and rests on top of the wooden frame 3 as will be further described herein after.

A plurality of rigid bodies comprising brackets 9 each of substantially L-shaped cross section are secured to one end margin 7 of the closure panel 2 and are secured to the wooden frame 3. A first arm 9a of the L of each bracket 9 is secured to the end margin 7 or 8 of the closure panel 2 and a second arm 9b of the L is secured to the wooden frame 3.

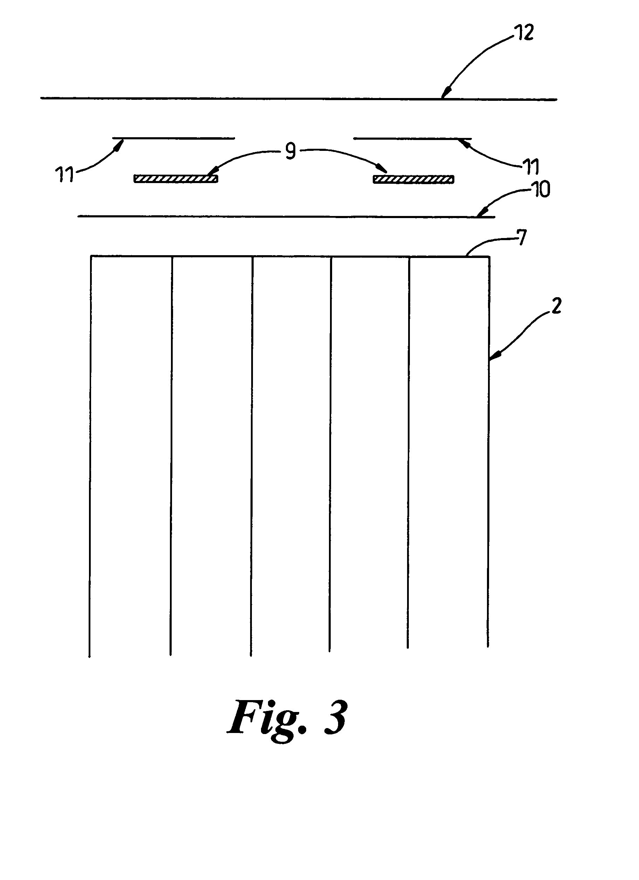

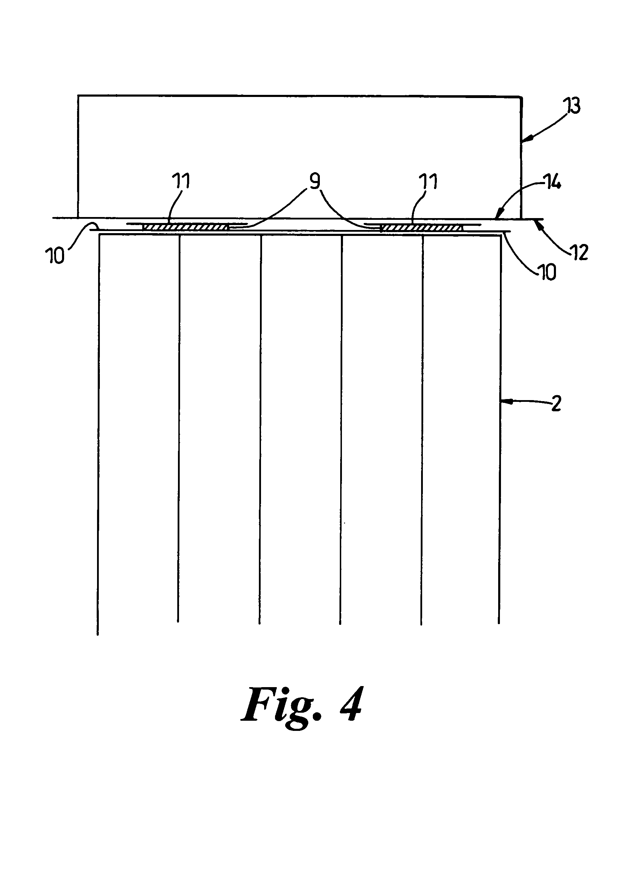

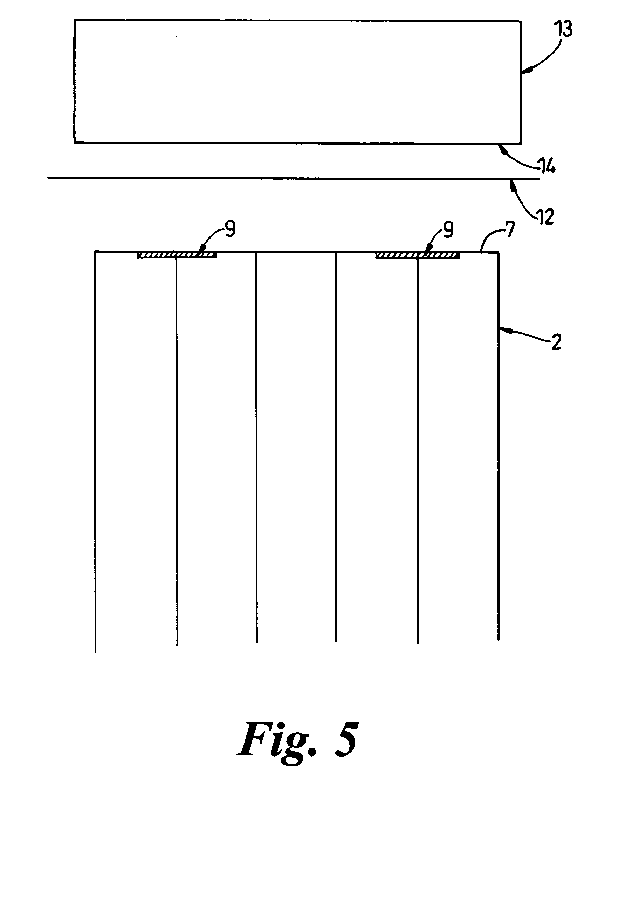

The rigid bodies 9 are formed from a mesh manufactured from a metal material and are secured to the closure panel 2 as described below with reference to Figures 3 to 5.

The closure panel 2 is held in a fixed position with end margin 7 exposed. A sheet of sealing material 10 is placed on top of the end margin 7. The sheet of sealing material 10 is manufactured from polycarbonate. Two brackets 9 are then placed on top of the sheet of sealing material 10 and are spaced apart from one another along the margin 7. It will be appreciated that only first arm 9a of the L of each bracket 9 is so placed, the second arm 9b of each bracket projecting outwardly of the margin 7 and not being shown in Figures 3 to 5 for clarity.

A second sheet of sealing material 11 is placed on top of the first arm 9a of each bracket 9, a separate sheet of sealing material 11 being placed on top of each bracket 9. Each sheet 11 has an area which is greater than the area of the first arm 9a of each bracket 9 so that when the sheets 11 are so placed, the sheet 11 completely covers the first arm 9a of a respective bracket 9.

Finally a sheet of protective material 12 is placed on top of the above components so as to completely cover said components. The protective sheet 12 is manufactured from a heat resistant material such as polyimide.

A heated platen 13 having a rectangular welding face 14 is then urged into contact with the sheet of protective material 12 with a force acting in a direction perpendicular to the margin 7 of closure panel 2. The closure panel 2 may also be urged towards the face 14 of platen 13. The face 14 is thus moved into contact with the protective sheet 12 and heat is transmitted from the platen 13, through the protective sheet 12 and into the sheets 10 and 11 and the bracket 9.

The sheets 10 and 11 melt so that the sheet 10 sticks to and seals the margin 7 to seal closed the openings formed in the margin 7. The bracket 9 melts into the margin 7 and the sealing sheet 10 and is thus secured thereto. The sheets 11 melt into the bracket 9, through the apertures formed in the mesh of first arms 9a of the brackets 9 and into contact with sheet 10. The platen 13 is then moved away from the margin 7 of the closure panel which is thus no longer subject to the heat and pressure.

The components cool with the result that, when cooled, the openings formed in the margin are sealed closed and also the first arms 9a of the brackets 9 are secured to the margin 7. It will be appreciated that the welding process thus simultaneously welds the openings closed and welds the bracket 9 to the closure panel 2 using a single application of the heated platen 13.

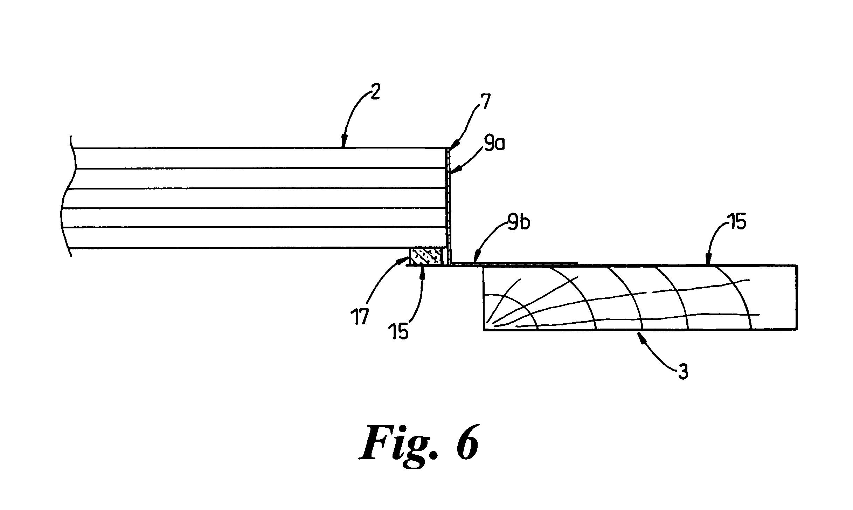

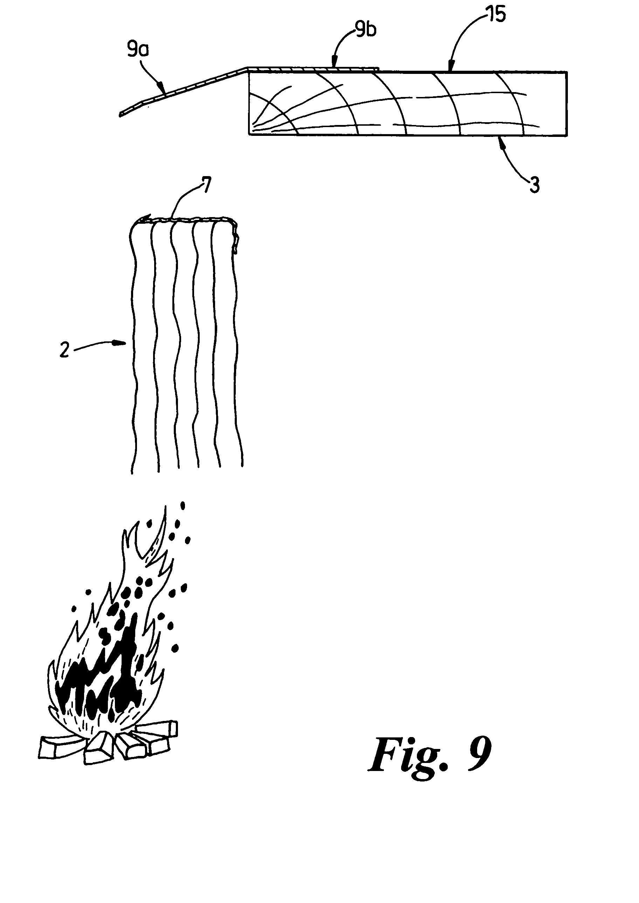

Referring now to Figures 6 to 9 a closure panel 2 is shown to which the L-shaped bracket 9 has been secured in the manner described above. Thus one arm 9a of the bracket 9 is secured to and is parallel with the end margin 7 of the closure panel 2, the other arm 9b of the bracket extending outwardly from the lower edge of the margin 7 as viewed in Figure 6. The opposite end margin 8 of the closure panel 2 does not have any brackets 9 secured thereto.

A thin layer of heat sensitive material 15 is placed on top of the wooden frame 3 which forms the periphery of the aperture formed in the roof of the building. The rectangular heat sensitive layer 15 extends around the periphery of the opening and extends beyond the inner periphery of the wooden frame 3 towards the centre of the aperture. The heat sensitive layer 15 is substantially rigid during normal temperatures but is sensitive to high temperatures which cause the heat sensitive layer 15 to melt.

A bead 17 of adhesive is positioned on the inner periphery of the heat sensitive layer 15, the under surface of the closure panel 2 resting on and being secured by the bead 17 of adhesive. The outwardly extending arm 9b of the bracket 9 rests on top of the part of the heat sensitive layer 15 which overlaps with the wooden frame 3. The arm 9b is secured to the wooden frame 3 using staples or the like. The load of the closure panel 2 is supported partially by the rigid heat sensitive layer 15 and partially by the rigid L-shaped bracket 9.

In the event of a fire in the building, the heat from the fire heats the closure panel 2, the rigid heat sensitive layer 15 and the bracket 9. The heat generated in a building fire is sufficient to melt the rigid heat sensitive layer 15 so as to reduce the load bearing capacity of the heat sensitive layer 15. Thus as the heat sensitive layer 15 heats up, the heat sensitive layer 15 melts and the closure panel 2 begins to pivot downwardly through the opening in the roof of the building by deforming the heat sensitive layer 15.

The closure panel 2 pivots about the intersection between the two arms 9a and 9b of the bracket 9. However the bracket 9 is sufficiently strong to prevent the closure panel 2 from falling through the opening. The opposite end margin 8 however is only secured to the wooden frame by the rigid heat sensitive layer 15.

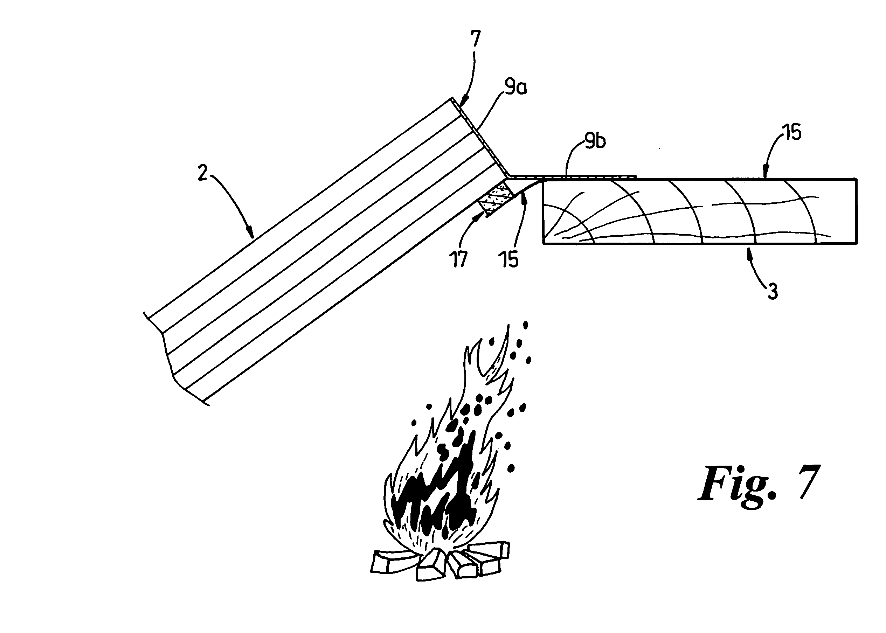

Thus, as the components are heated, the closure panel 2 begins to pivot downwardly about an axis through the intersection of arm 9a and 9b of the bracket 9 in the manner of a hatch. This is shown in Figure 7.

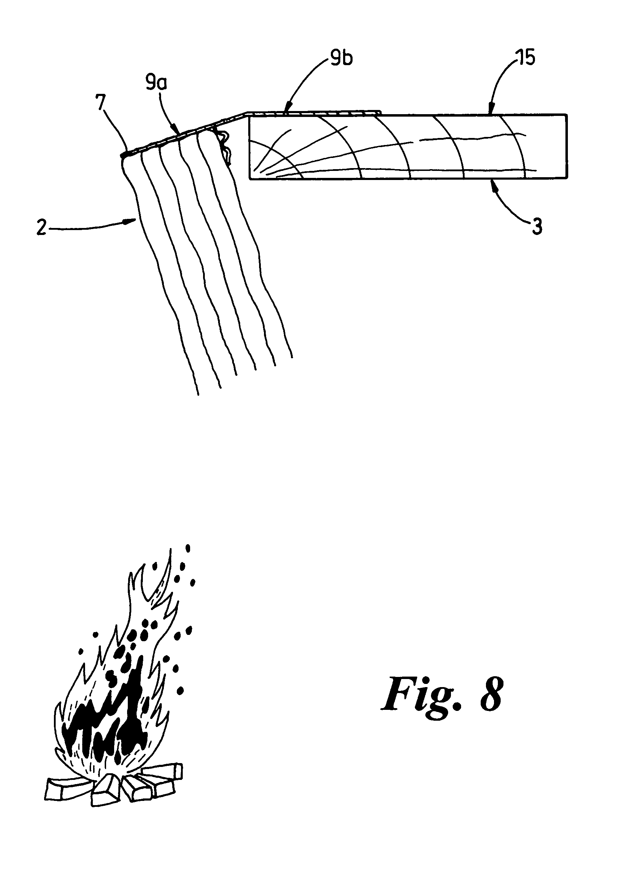

The rigid heat sensitive layer 15 eventually deform to such a degree that the heat sensitive layer 15 breaks completely leaving only one end margin 7 of the closure panel to be secured to the opening by the bent bracket 9. The bracket 9 bends under the weight of the closure panel 2 to such a degree that the closure panel 2 pivots through an angle of approximately 120 degrees from the original horizontal position of the closure panel 2. This is shown in Figure 8.

As the heat generated by the fire further heats the closure panel 2 and the bracket 9, the sealing sheet 10 begins to melt. It will be noted that the sealing sheet 10 secures the arm 9a of the bracket 9 to the end margin 7 of the closure panel 2. Thus when the sealing sheet 10 has melted sufficiently, the load of the hanging closure panel 2 breaks the weld between the arm 9a and the margin 7 and the closure panel 2 falls completely from the opening.

Thus, in the event of a fire the closure panel 2 initially pivots downwardly, fumes from the fire escaping through the aperture without the panel falling completely from the aperture and crushing a person who may be stood beneath the aperture. There is then a delay, which may be about 60 seconds, for the person to stand clear of the opening before the sealing strip 10 melts and the closure panel 2 falls completely from the opening.

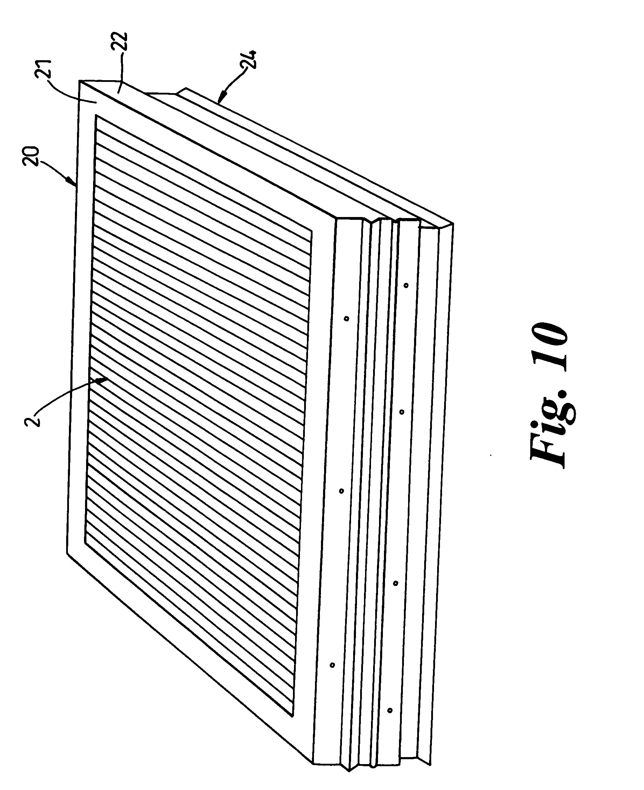

Referring now to Figures 10 to 13 a closure panel assembly comprises a closure panel 2 as has been described above secured to a rectangular frame 20 as might comprise part of a skylight or the like. The frame 20 comprises a rectangular top frame 21 and a peripheral wall 22 extending downwardly therefrom. The lower edge of the peripheral wall 22 terminates in an outwardly flared region 23 which is flared at an angle of 45 degrees to the peripheral wall 22. The closure panel 2 is received within the peripheral wall 21. The frame 20 is manufactured from a metal material such as aluminium.

The frame 20 is pivotally mounted on a rectangular base frame 24 which comprises the periphery of an opening formed in the roof of a building. The base frame 24 is manufactured from a thermally insulating material such as wood, plastic or glass fibre. A thermally insulating layer of material 24b is secured to an upper surface of the base frame 24. The insulating layer 24b is an isobutylene-isoprene rubber which is glued to the top of the base frame 24.

An electronic opening mechanism 25 as is well known in the art may be provided to pivot the closure panel 2 and frame 20 relative to the base frame 24.

The closure assembly further comprises a bracket 9 as has been described above. However, in this embodiment the second arm 9b is inclined outwardly of the first arm 9a by an angle of approximately 45 degrees. The first arm 9a comprises a mesh whilst the second arm 9b comprises a solid panel. The first arm 9a is secured to the end margin 7 of the closure panel 2 using the welding method described above.

The closure panel 2 is secured to the frame 20 using a layer of adhesive 29 between the upper surface of the closure panel 2 and the under-surface of the top frame 21. The closure panel is additionally secured using a bolt 30 which extends through the second arm 9b of the bracket 9 and through the outwardly flared region 23 of the frame 20.

A hinge 31 is bolted to the outside of the base frame 24 using a bolt 32. A compression spring 33 is secured by the bolt 32 between the outside of the base frame 24 and the hinge 31. The compression spring 33 absorbs any dimension changes of the base frame 24 and the hinge 31 as may occur due to thermal expansion or contraction under varying temperature conditions.

The frame 20 is secured to the hinge 31 by bolt 30 which passes through the hinge 31, and also passes through the outwardly flared region 23 of the frame 20 and the second arm 9b of the bracket 9.

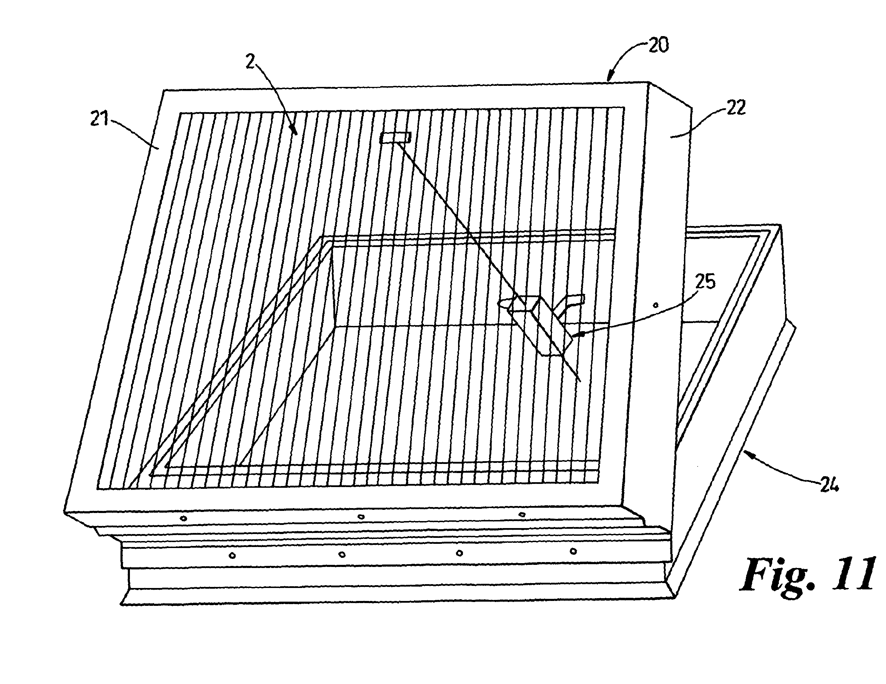

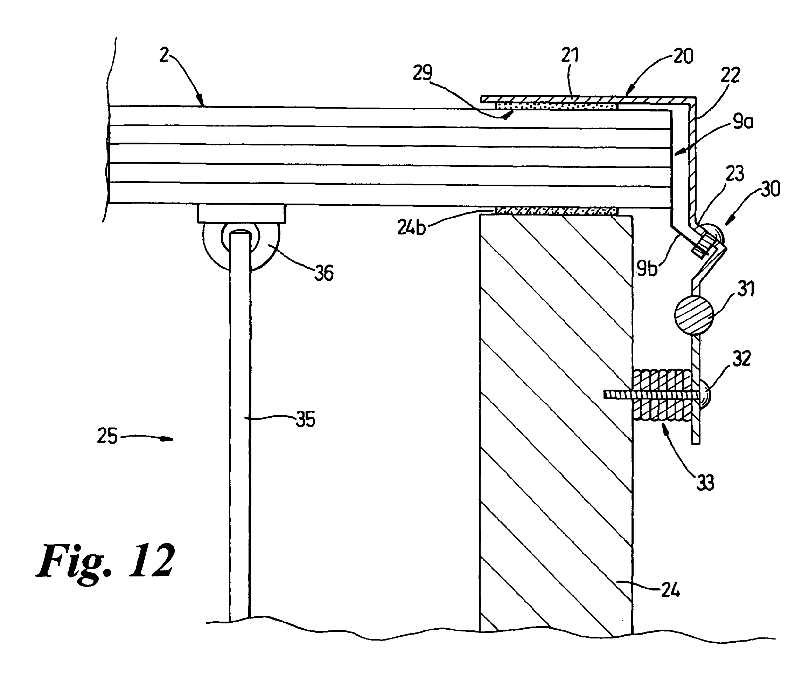

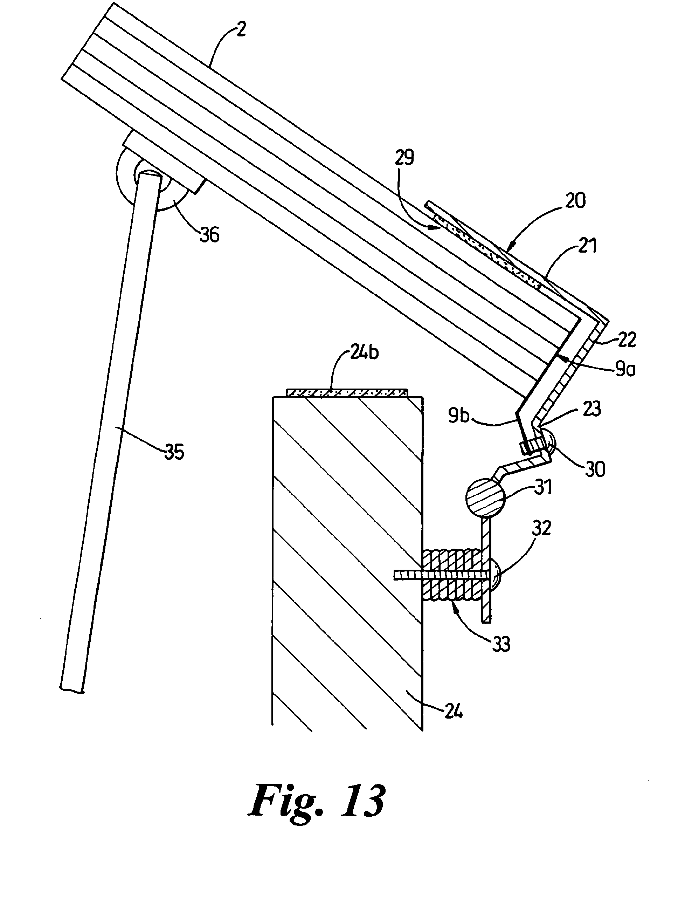

Thus the closure panel 2 can pivot between a closed, horizontal position as shown in Figure 10 and 12 to an open, inclined position as shown in Figures 11 and 13. The electronic motor driven opening mechanism 25 can be used for this purpose. The mechanism 25 comprises a strut 35 which at its upper end, engages a ring 36 secured to the underside of the closure panel 2. The ring may be secured using a heat welding process. The lower end of the strut 35 is secured to a rack or other suitable device comprising part of the mechanism.

When the closure panel 2 is in the horizontal position, the underside of the closure panel 2 rests on the insulating layer 24b. The upper surface and outer margin 7 of the closure panel 2 are secured to the base frame 24 using the hinge 31 which is entirely on the outside of the closure panel assembly.

Thus it will be appreciated that there is no thermal bridge between the outside of the closure panel 2 and the inside of the closure panel 2. Any cold flowing through the closure panel 2 is halted or resisted by the thermally insulating layer 24b and the thermally insulated base frame 24. Any cold flowing through the metal frame 20 or the metal hinge 31 is halted or resisted by the thermally insulating base frame 24. Thus condensation on the underside of the closure panel 2 is eliminated or at least reduced.

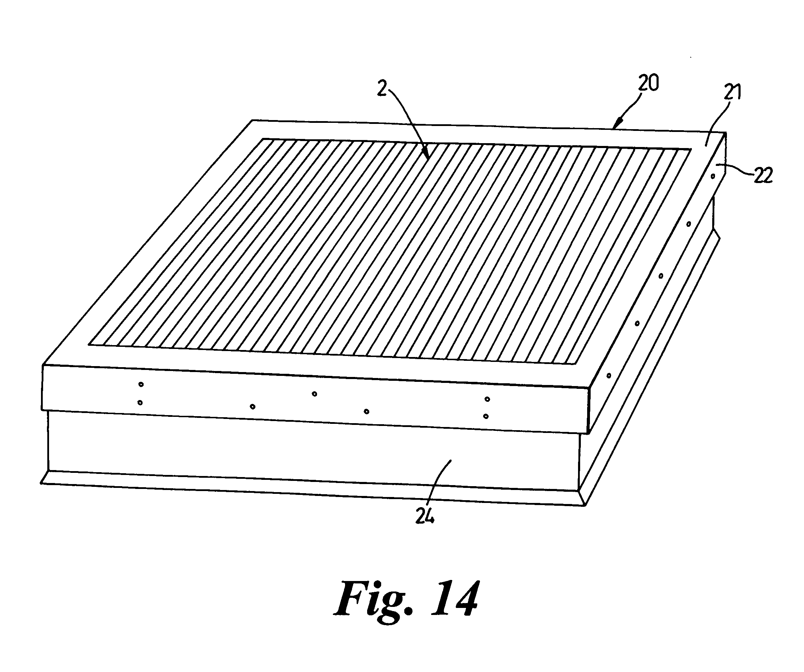

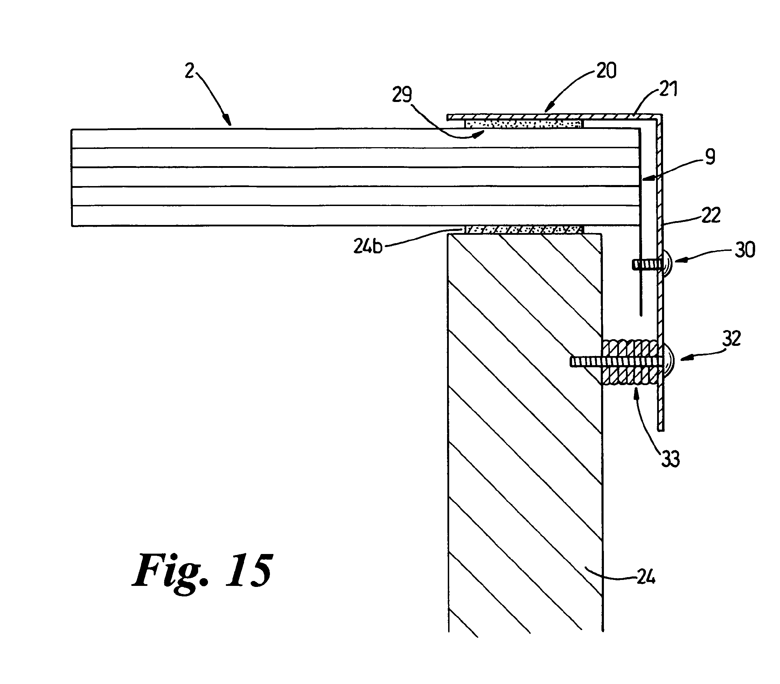

It will also be appreciated that the upper frame 20 need not be pivotally secured to the base frame 24. The hinge 31 may thus be removed as shown in Figures 14 and 15 and downwardly extending wall 22 of the frame 20 is bolted directly to the base frame 24. In this embodiment the bracket 9 comprises a single sheet, the upper part of which is welded to the end margin 7 of the closure panel whilst the lower part of which is bolted to the base frame 24. However the thermal bridge between the outside of the closure panel 2 and the inside of the closure panel is nonetheless still absent thus reducing condensation on the underside of the closure panel 2.

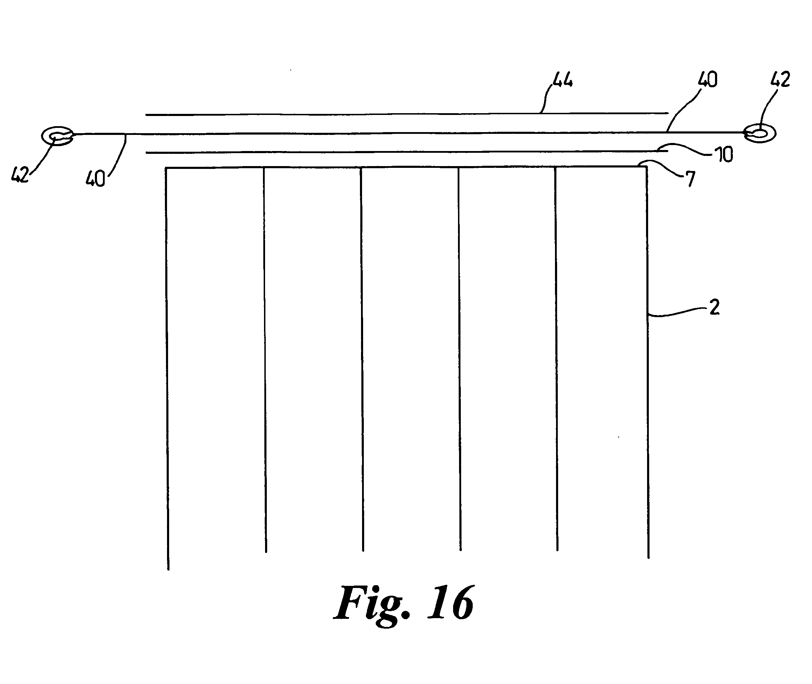

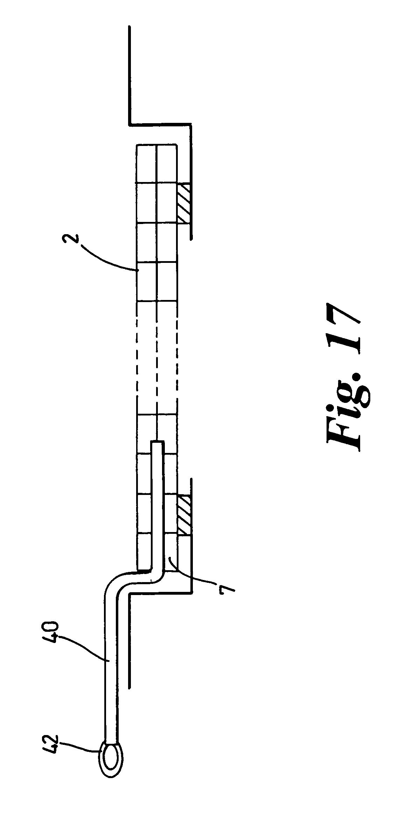

Referring now to Figures 16 and 17, a closure panel 2 has flexible bands 40 welded to the margin 7 of the closure panel 2 instead of the brackets 9.

Each band 40 comprises a flexible strip of metal, one end of which is provided with an eyelet 42.

The bands 40 are placed parallel with the margin 7 of the closure panel 2 so that the eyelets 42 extend beyond the closure panel 2 as can be seen from Figure 16.

A sheet of sealing material 10 is placed between the bands 40 and the margin 7. A second sheet of material 44 is placed on top of the bands 40, and the bands 40 are welded to the margin 7 as described above in relation to the brackets 9 of Figure 3 to 5.

In use, the closure panel 2 is placed on a frame 46 which is secured to the periphery of the closure panel 2 and to the periphery of the opening in the roof of the building. The closure panel 2 rests on a thin layer of heat sensitive material as described above.

The eyelets 42 of the bands 40 are secured to the roof using a screw, pin or bolt or the like (not shown) which is inserted through a respective eyelet 40.

In the event of a fire in the building, the layer of heat sensitive material melts causing the closure panel 2 to fall through the opening in the roof. As the closure panel falls, the bands 40 tighten and the closure panels pivot downwardly so as to hang from the bands 40. The bands 40 may be designed to break after a pre-determined period of time so that the closure panel 2 falls to the floor.

## Claims

1. A method of securing a body to a panel (2) of the type comprising a plurality of spaced apart, parallel sheets (4) and a plurality of spaced apart ribs (5) which serve to maintain the spatial relationship between the sheets (4), the ribs (5) and/or the inner surfaces of the sheets (4) defining cavities (6) having openings associated therewith at a margin (7) of the panel, the openings being sealed by welding a sheet of sealing material (10) to the panel so as to close the openings, the body (9) being simultaneously welded to the panel (2) with the same welding operation.

2. The method of claim 1 wherein the panel (2), the sheet of sealing material (10) and the body (9) are urged together during welding.

3. The method of claim 2 wherein the sheet of sealing material (10) and the body (9) are welded to said margin (7) of the panel (2) , the sheet of sealing material (10) and the body (9) being urged together during welding with a force which acts in a direction perpendicular to the margin (7).

4. The method of any one of claims 1 to 3 wherein the body (9) melts during the welding process, subsequent cooling of the body (9) welding the body (9) to the panel (2).

5. The method of any one of the preceding claims wherein the sheet of sealing material (10) is positioned between the panel (2) and the body (9).

6. The method of any one of the preceding claims wherein the weld is created using a heated platen (13).

7. The method of any one of the preceding claims wherein the body (9) is sandwiched between the sheet of sealing material (10) and a second sheet of sealing material (11).

8. The method of any one of the preceding claims wherein a protective material (12) is positioned between the heated platen (13) and the second sheet of sealing material (11) to ensure that the heated platen (13) does not come into contact with the second sheet of sealing material (11).

9. A panel (2) of the type comprising a plurality of spaced-apart, parallel sheets (4) and a plurality of spaced apart ribs (5) which serve to maintain the spatial relationship between the sheets (4), the ribs (5) and/or the inner surfaces of the sheets (4) defining cavities (6) having openings associated therewith at a margin of the panel, the openings having been sealed by welding a sheet of sealing material (10) to the panel so as to close the openings, a body (9) having been simultaneously welded to the panel (2) in the same welding operation.

10. The panel (2) of claim 9 wherein the body (9) comprises a mesh portion, the mesh portion having been welded to the panel (2).

11. The panel (2) of claim 9 or claim 10 wherein the body (9) is formed from a metal material.

12. The panel (2) of any one of claims 9 to 11 wherein the panel (2) comprises a closure panel for closing an opening formed in the roof of a building, the body (9) comprising a bracket adapted to secure the closure panel to the periphery of the opening.

13. The panel (2) of claim 12 wherein the bracket comprises two arms (9a, 9b), the first arm (9a) being welded to the closure panel, the second arm (9b) extending outwardly from the closure panel.

14. The panel (2) of claim 13 wherein the second arm (9b) is adapted to be secured to a periphery of the opening of the building.

15. The panel (2) of claim 13 or claim 14 wherein the second arm (9b) of the bracket extends outwardly from the first arm (9a) at an angle of approximately 90 degrees, the bracket thus being of L-shaped cross section.

16. The panel (2) of claim 13 or claim 14 wherein the second arm (9b) of the bracket extends outwardly from the first arm (9a) at an angle of approximately 45 degrees.

17. A closure assembly (1) comprising a closure panel (2) for closing an opening formed in the roof of a building, the closure panel (2) being of the type comprising a plurality of spaced apart, parallel sheets (4) and a plurality of spaced apart ribs (5) which serve to maintain the spatial relationship between the sheets (4), the ribs (5) and/or the inner surfaces of the sheets (4) defining cavities (6) having openings associated therewith at a margin of the panel, the openings having been sealed by welding a sheet of sealing material (10) to the panel (2) so as to close the openings, securing means (9, 40) having been simultaneously welded to the closure panel (2), the securing means (9, 40) also being secured to the periphery of the opening in the roof of the building.

18. The closure assembly (1) of claim 17 wherein a sheet of heat sensitive material (15) is secured to the periphery of the opening, the underside of the closure panel (2) being secured to and supported by the sheet of heat sensitive material (15), the arrangement being such that, when subjected to relatively high levels of heat, the sheet of heat sensitive material (15) melts, the load of the closure panel (2) acting on the melting sheet (15) to pivot the closure panel (2) downwardly through the opening about the securing means (9, 40).

19. The closure assembly (1) of claim 18 wherein further heating breaks the weld between the securing means (9, 40) and the closure panel (2), the closure panel (2) consequently falling downwardly through the opening.

20. The closure assembly (1) of any one of claims 17 to 19 wherein the securing means (9, 40) comprises a bracket (9).

21. The closure assembly (1) of any one of claims 17 to 19 wherein the securing means (9, 40) comprises an elongate band (40), one end of which is welded to the closure panel (2), the other end of which is adapted to be secured to the periphery of the opening.

22. The closure assembly (1) of claim 21 wherein the band (40) is flexible.

23. The closure assembly (1) of claim 21 or claim 22 wherein the band (40) is made from a metal material.

24. The closure assembly (1) of any one of claims 21 to 23 wherein the other end of the band (40) comprises an eyelet (42) through which a screw, pin or bolt can be inserted, the screw, pin or bolt also being secured to the periphery of the opening.

25. The closure assembly (1) of any one of claims 21 to 24 wherein the securing means (9, 40) comprises two elongate bands (40), each being welded to the same end of the closure panel (2).

26. The closure assembly (1) of claim 17 wherein the securing means (9, 40) comprises a bracket (9) secured to a hinge (31), the arrangement being such that the closure panel (2) can pivot about the hinge (31) between an open position in which air can flow through the opening and a closed position in which the flow of air through the opening is prevented by the closure panel (2).

27. The closure assembly (1) of claim 26 wherein the hinge (31) is mounted on a base frame (24) forming the periphery of the opening, the base frame (24) being manufactured from a thermally insulating material.

28. The closure assembly (1) of claim 27 wherein an additional insulating layer (24b) is secured to the base frame (24), the closure panel (2) resting on the additional insulating layer (24b) when in the closed position.
